# EUROPÄISCHE PATENTSCHRIFT

(11) **EP 0 445 611 B1**
(45) Veröffentlichungstag und Bekanntmachung des Hinweises auf die Patenterteilung: **27.04.1994**
(21) Anmeldenummer: 91102681.3
(22) Anmeldetag: 23.02.1991
(51) Int. Cl.: C10M 105/00, C10M 105/36, C10M 105/38, C09K 5/04

(54) **Verwendung von Esterölen als Schmiermittel für Kältemittelverdichter**
Use of ester oils as lubricant for refrigerant compressor
Utilisation d'huiles d'esters comme lubrifiants pour compresseur de réfrigérant

(30) Priorität: 05.03.1990 DE 4006827
(43) Veröffentlichungstag der Anmeldung: 11.09.1991
(73) Patentinhaber: HOECHST AKTIENGESELLSCHAFT, 65926 Frankfurt am Main (DE)
(72) Erfinder: Cornils, Boy, Prof. Dr. Dipl.-Chem., W-6238 Hofheim (DE); Weber, Jürgen, Dr. Dipl.-Chem., W-4200 Oberhausen 11 (DE); Lappe, Peter, Dr. Dipl.-Chem., W-4220 Dinslaken (DE); Springer, Helmut, Dipl.-Ing., W-4200 Oberhausen 11 (DE); Preisegger, Ewald, Dipl.-Ing., W-6085 Nauheim (DE); Henrici, Rainer, Dipl.-Ing., W-6392 Neu-Anspach (DE)

(56) Entgegenhaltungen:
- EP-A- 0 406 479
- WO-A-90/12849
- GB-A- 2 216 541
- US-A- 2 807 155
- US-A- 4 851 144
- DATABASE WPIL, accession no. 81-08816D, Derwent Publications Ltd, London, GB.
- DATABASE WPIL, accession no. 81-38791D, Derwent Publications Ltd, London, GB.

## Beschreibung

Die Erfindung betrifft die Verwendung von Esterölen als Schmiermittel für Kältemittelverdichter, die mit chlorfreien, teilfluorierten Kohlenwasserstoffen als Kältemittel betrieben werden.

Zur Kälteerzeugung im industriellen, gewerblichen wie auch im privaten Bereich werden in großem Umfang Kältemittelverdichter eingesetzt. Diese Vorrichtungen arbeiten mit mechanischen Verdichtern, die das Kältemittel komprimieren, im Verflüssiger durch Kühlen mit Luft, Wasser oder einem anderen Medium verflüssigen und im Verdampfer unter Wärmeaufnahme aus dem zu kühlenden Medium verdampfen. Als Kältemittel werden vorwiegend Ammoniak für Großanlagen und Fluorchlorkohlenwasserstoffe wie Dichlordifluormethan, Chlortrifluormethan für Großanlagen, gewerbliche Kälteanlagen und für Haushaltsgeräte eingesetzt.

Zur Schmierung von Kältemittelverdichtern verwendet man hochraffinierte, weißölähnliche, im allgemeinen naphthenbasische Mineralöle. Als vollsynthetische Öle für Kältemittelverdichter gelangen Alkylaromaten und daneben auch Polyalpha-olefine zum Einsatz.

Aufgabe der Schmieröle ist es, die beweglichen Verdichterteile zu schmieren, die Wärme von den heißen Verdichterteilen abzuführen und den Kompressionsraum sowie die Ventile abzudichten. Diese Aufgaben bestimmen auch die Eigenschaften, denen die Schmieröle genügen müssen. Sie müssen thermischen Belastungen gewachsen sein und auch bei den Temperaturen des Verdampfers fließfähig bleiben. Überdies ist zu berücksichtigen, daß die Schmieröle aus dem Kompressionsraum in den Kältemittelkreislauf ausgetragen werden und durch nachgeschaltete Ölabscheider nicht vollständig entfernt werden können. Sie müssen daher mit dem Kältemittel in weiten Temperatur- und Konzentrationsbereichen mischbar sein, so daß die Rückführung von Schmieröl, das in den Kältemittelkreislauf gelangt ist, in den Verdichter sichergestellt wird.

Fluorchlorkohlenwasserstoffe stehen seit einiger Zeit im Verdacht, die Ozonschicht der Erdatmosphäre zu schädigen. Daher ist man bestrebt, ihre Verwendung auf solche Fälle zu beschränken, in denen sie nicht ausgetauscht werden können. Im übrigen versucht man, sie durch gleichwirkende, jedoch unschädliche Stoffe zu ersetzen. Auf dem Gebiet der Kältemittel für Kälteanlagen werden zukünftig chlorfreie, teilfluorierte Kohlenwasserstoffe wie 1,1,1,2-Tetrafluorethan, 1,1,1,2,3,3,3-Heptafluorpropan, Pentafluorethan, 1,1,1,3,3,3-Hexafluorpropan und Trifluormethan eingesetzt werden. Diese Stoffe zeichnen sich durch hohe thermische Stabilität und entsprechende thermodynamische Eigenschaften in den Temperaturbereichen aus, die beim Betrieb von Kältemittelverdichtern auftreten.

Nachteilig ist jedoch, daß diese chlorfreien, aliphatischen Fluorkohlenwasserstoffe nur sehr geringe Mischbarkeit mit den bisher verwendeten Schmiermitteln für Kälteanlagen aufweisen. In weiten Konzentrationsbereichen bilden die beiden Substanzklassen ein Zweiphasengemisch mit dem Ergebnis, daß die Rückführung des aus dem Verdichter ausgetragenen Schmiermittels vor allem bei tiefen Verdampfungstemperaturen erheblich behindert wird. Die bekannten Schmiermittel sind daher in Anlagen mit chlorfreien Kältemittel-Substituten im allgemeinen nicht mehr verwendbar.

Man hat versucht, diese Schwierigkeiten durch Einsatz von Schmiermitteln auf Basis von Polyalkylenglykolen zu umgehen. Die meisten Polyalkylenglykol-Typen sind zwischen -40 und +50°C mit den genannten chlorfreien Kältemitteln vollständig mischbar. Erst bei Temperaturen oberhalb etwa 50°C treten Mischungslücken auf, die sich zu höheren Temperaturen hin auf einen großen Konzentrationsbereich ausweiten.

Dennoch ist zu erwarten, daß Polyalkylenglykole nur begrenzt als Schmiermittel eingesetzt werden können, weil sie stark hygroskopisch sind. Ihre Trocknung auf eine Restfeuchte von <100 ppm erfordert einen hohen Aufwand. Darüberhinaus ist durch völligen Luftabschluß dafür Sorge zu tragen, daß eine erneute Feuchtigkeitsaufnahme vermieden wird. Sie können daher nur in hermetisch geschlossenen, kleinen Kältesystemen, z.B. Haushaltskühlgeräten, verwendet werden. In großen Kälteanlagen, bei denen Wartungsarbeiten mit gelegentlichen Eingriffen in den Kältemittelkreislauf erforderlich sind, ist im Laufe der Zeit mit einer erheblichen Feuchtigkeitsaufnahme zu rechnen. Die an das Polyalkylenglykol gebundene Feuchtigkeit läßt sich auch mit Hilfe von Filtertrocknern nicht mehr entfernen. Probleme mit metallischen Werkstoffen im System sind daher die Folge. Überdies genügt die thermische Stabilität der Polyalkylenglykole nicht allen Anforderungen. Schon oberhalb etwa 180°C, eine solche Temperatur kann bei extremen Betriebsbedingungen im Druckventil des Verdichters auftreten, beginnen sie sich zu zersetzen.

Das für die Polyalkylenglykole Gesagte gilt auch für Schmiermittel aus Polyalkylenglykolen und Estern mehrwertiger Alkohole mit Alkancarbonsäuren oder Estern aus Alkandicarbonsäuren und einem einwertigen Alkohol. Derartige Gemische sind Gegenstand der US-A-4,851,144.

In der nicht-vorveröffentlichten WO-A-90/12849 werden Schmiermittel beschrieben, die aus wenigstens einem Carbonsäureester einer Polyhydroxyverbindung bestehen. Sie können zusammen mit Fluorkohlenwasserstoffen verwendet werden, die ein oder zwei Kohlenstoffatome enthalten. Die ebenfalls nicht vorveröffentlichte EP-A-0 406 479 betrifft Carbonsäureester aus C₃- bis C₁₈-Moncoarbonsäuren und Neopentylglykol als Alkoholkomponente. Auch diese Ester dienen als Schmiermittel für Fluorkohlenwassestoff-Kältemittel.

Im Mittelpunkt der GB-A-2 216 541 stehen Kältemittel/Schmiermittel-Kombinationen, die in Kältemittelverdichtern eingesetzt werden. Als Kältemittel werden Fluorkohlenwasserstoffe, Fluorchlorkohlenwasserstoffe und Fluorchlorkohlenstoffverbindungen genannt. Kriterium für die als Schmiermittel verwendeten Ester ist ihr Molekulargewicht, das größer als 250 sein soll.

In keiner der zitierten Veröffentlichungen wird auf Ester eingegangen, die als Schmiermittel eingesetzt werden können, wenn höhere Viskositäten verlangt werden.

Es bestand daher die Aufgabe Schmiermittel für Kältemittelverdichter bereitzustellen, die frei von den beschriebenen Mängeln bekannter Schmiermittel sind und die immer dann eingesetzt werden können, wenn chlorfreie, teilfluorierte Kohlenwasserstoffe als Kältemittel Anwendung finden.

Die Erfindung besteht somit in der Verwendung von aus Monocarbonsäuren und 3(4),8(9)-Bis(hydroxymethyl)-tricyclo-[5.2.1.0.^{2,6}]decan hergestellten Estern als Schmiermittel für Kältemittelverdichter, die mit chlorfreien, teilfluorierten Kohlenwasserstoffen als Kältemittel betrieben werden.

Die Monocarbonsäuren, insbesondere solche mit 2 bis 20 Kohlenstoffatomen, sind gesättigt und geradkettig oder verzweigt. Beispiele für geeignete Säuren sind Essigsäure, Propionsäure, n-Buttersäure, i-Buttersäure, n-Valeriansäure, Pivalinsäure, 2-Methylbuttersäure, 3-Methylbuttersäure, 2-Methylpentansäure, 2-Ethylbuttersäure, n-Heptansäure, Isooctansäure, 2-Ethylhexansäure, Isononansäure, Isodecansäure, Isotridecansäure, Palmitinsäure und Stearinsäure. Die Carbonsäuren sind handelsüblich, sie werden nach unterschiedlichen, dem Fachmann bekannten Verfahren gewonnen.

Die als Schmiermittel verwendeten Ester können in reiner Form, als Gemisch isomerer Verbindungen und als Mischung von zwei oder mehr Estern unterschiedlicher chemischer Zusammensetzung eingesetzt werden.

In den folgenden Beispielen wird die Herstellung von Estern beschrieben, außerdem werden ihre Eigenschaften aufgeführt, soweit sie für die Verwendung der Ester als Schmiermittel bedeutsam sind. Selbstverständlich ist der Umfang der Erfindung nicht auf die geschilderten Ausführungsformen beschränkt.

### Beispiel : Herstellung von TCD-Alkohol DM-di-n-butyrat

196 g (1 mol) TCD-Alkohol DM, (3(4),8(9)-Bis-(hydroxymethyl)-tricyclo[5.2.1.0^{2,6}]decan), und 189 g (2,1 mol) Buttersäure werden nach Zugabe von 59 g Cyclohexan in Gegenwart von 1,9 g (0,01 mol) p-Toluolsulfonsäure als Katalysator bei einer Reaktionstemperatur von 140°C über einen Zeitraum von 4 Stunden umgesetzt. Das anfallende Reaktionswasser wird als Azeotrop abgetrennt.

Nach Neutralisation mit 5 Gew.-%iger Natronlauge, anschließender Phasentrennung und mehrmaliger Wäsche mit Wasser bis zum Neutralpunkt wird die organische Phase nochmals durch Zugabe 5 Gew.-%iger NaOH auf einen pH-Wert von 9 - 10 eingestellt. Nach erneuter Phasentrennung und Wäsche mit Wasser wird das Rohprodukt über eine Claisenbrücke destilliert. Nach Abtrennung der Restmenge Wasser gehen bei einer Sumpftemperatur von 250°C und einem Druck von 10 mbar (1 kPa) 305 g Produkt über, entsprechend einer Ausbeute an TCD-Alkohol DM-di-n-butyrat von 91 %.

Die Ester werden in bekannter Weise aus den vorgenannten Säuren und Alkohol in Gegenwart von sauren Katalysatoren hergestellt. Als Katalysatoren eignen sich Mineralsäuren wie Schwefelsäure, Phosphorsäure, sowie deren saure Salze, ferner Trialkyl- oder Triarylphosphate und p-Toluolsulfonsäure. Um eine möglichst vollständige Umsetzung zu erzielen, empfiehlt es sich, einen der Reaktionspartner im Überschuß anzuwenden und/oder das Reaktionswasser destillativ, gegebenenfalls unter Zusatz eines Azeotropbildners wie Benzol oder Toluol, abzutrennen.

Die erfindungsgemäß verwendeten Schmiermittel besitzen gute Mischbarkeit mit den als Kältemitteln eingesetzten chlorfreien, teilfluorierten Kohlenwasserstoffen in den Temperaturbereichen, die in Kompressionskälteanlagen auftreten können. Ihre Viskosität liegt bei 40°C zwischen etwa 10 und 100 mm²/s und entspricht damit den Anforderungen, die an das Schmiermittel für das vorbeschriebene Einsatzgebiet gestellt werden. Sie weisen darüber hinaus unter Ausschluß von Luftsauerstoff und Feuchtigkeit, also unter Bedingungen, die in einem Kältemittelkreislauf erfüllt sein müssen, ausgezeichnete thermische Stabilität auf. Die Ester sind nicht hygroskopisch. Sie können daher ohne großen Aufwand getrocknet werden. Restfeuchten, die nach der deutschen Norm DIN 51 503 35 ppm nicht überschreiten dürfen, lassen sich ohne weiteres erreichen.

### Eigenschaften des in den Beispiel beschriebenen Esters

Als Kriterien, die für die Verwendung der vorstehend beschriebenen Ester als Schmiermittel wichtig sind, werden ihr thermisches Verhalten, ihre Viskosität und ihre Mischbarkeit mit Kältemitteln, Prototypen sind 1,1,1,2-Tetrafluorethan und 2 H-Heptafluorpropan, angegeben.

Die Prüfung der thermischen Stabilität der Ester erfolgt in Anlehnung an DIN 51593 in einem U-Rohr bei 250/40°C und 96 h. Der mit Öl gefüllte Schenkel des U-Rohrs wird auf 250°C eingestellt und steht in Kontakt mit der Dampfphase des Kältemittels, das in den zweiten Schenkel einkondensiert und dann auf 40°C eingestellt wird. Die Auswertung erfolgt optisch (Ölverfärbung). Ergänzend wird ein wäßriger Auszug der Dampfphase durch eine ionensensitive Elektrode auf Fluoridionen geprüft.

Eine gaschromatografische Analyse der Gasphase gibt Aufschluß über mögliche gasförmige Zersetzungsprodukte des Esters bzw. Kältemittels. Ein Vergleich des Chromatogramms erfolgt mit dem einer Blindprobe.

Die Messung der Viskosität der Ester erfolgt in einem Ubbelohde-Viskosimeter bei 40°C.

Zur Prüfung der Mischbarkeit der Ester mit den Kältemitteln gibt man eine definierte Menge Ester (etwa 0,2 bis 3 g) in ein Glasröhrchen von etwa 10 ml Inhalt. Nach Eintauchen in flüssigen Stickstoff kondensiert man je nach einzustellender Konzentration zwischen 6 und 3 g des Kältemittels dazu. Darauf evakuiert man das Glasröhrchen, verschließt es durch Abschmelzen und durchschreitet mit der Mischung bestimmter Zusammensetzung einen Temperaturbereich von -40°C bis +80°C. Bei Ausbildung zweier Phasen bzw. bei beginnender Trübung kann der Entmischungspunkt, d.h. ein Punkt auf der Grenzkurve des Mischungsdiagramms bestimmt werden. Die Gesamtheit der gefundenen Entmischungspunkte ergeben dann die Grenzkurve der Mischungslücke.

### TCD-Alkohol DM-di-n-buyrat

- thermische Stabilität: : keine Zersetzung
- Viskosität: : ν = 26,3 mm²/s
- Mischbarkeit: : Mischungslücke bei etwa -25°C

## Patentansprüche

1. Verwendung von aus Monocarbonsäuren und 3(4),8(9)-Bis(hydroxymethyl)-tricyclo-[5.2.1.0.^{2,6}]decan hergestellten Estern als Schmiermittel für Kältemittelverdichter, die mit chlorfreien, teilfluorierten Kohlenwasserstoffen als Kältemittel betrieben werden.

## Claims

1. The use of esters prepared from monocarboxylic acid and 3(4),8(9)-Bis(hydroxymethyl)-tricyclo-[5.2.1.0^{2,6}]decane as lubricants for refrigeration compressors utilising chlorine-free, partially fluorinated hydrocarbons as refrigerants.

## Revendications

1. Utilisation d'esters préparés à partir d'acides monocarboxyliques et du 3(4),8(9)-bis-(hydroxyméthyl)-tricyclo[5.2.1.0^{2,6}]décane en tant que lubrifiants pour des compresseurs à réfrigérants opérant avec des réfrigérants consistant en hydrocarbures partiellement fluorés mais exempts de chlore.
